# EUROPEAN PATENT SPECIFICATION

(11) **EP 2 920 627 B1**
(45) Date of publication and mention of the grant of the patent: **23.12.2020**
(21) Application number: 13854819.3
(22) Date of filing: 25.09.2013
(51) Int. Cl.: G02B 6/40, G02B 6/36, G02B 6/44

(54) **OPTICAL FIBER / ELECTRICAL COMPOSITE CABLE ASSEMBLY WITH SEALED BREAKOUT KIT**
GLASFASER-/ELEKTROKABELANORDNUNG MIT ABGEDICHTETEM BREAKOUT-KIT
ENSEMBLE FIBRE OPTIQUE/CÂBLE COMPOSITE ÉLECTRIQUE À ENSEMBLE POINT DE DÉRIVATION SCELLÉ

(30) Priority: 19.11.2012 US 201261728020 P; 08.03.2013 US 201313791248; 15.03.2013 US 201313832665; 29.04.2013 US 201313872572
(43) Date of publication of application: 23.09.2015
(73) Proprietor: CommScope Technologies LLC, North Carolina 28602 (US)
(72) Inventor: ISLAM, Nahid, Westmont, Illinois 60559 (US)
(74) Representative: Kransell & Wennborg KB
(86) International application number: PCT/US2013/061530
(87) International publication number: WO 2014/077956

(56) References cited:
- EP-A1- 2 159 616
- EP-A2- 1 245 980
- WO-A1-2012/038104
- US-A- 4 373 777
- US-A- 5 473 719
- US-A1- 2005 111 811
- US-A1- 2010 092 136
- US-A1- 2011 091 169
- US-A1- 2012 230 636
- US-B1- 6 389 214

## Description

### BACKGROUND

### Field of the Invention

This invention relates to hybrid electrical and optical cable assemblies. More particularly, the invention relates to a electrical and optical hybrid cable with an in-line transition housing between the hybrid cable and individual termination jumpers for the several conductors of the cable.

### Description of Related Art

The wireless communications industry is changing from traditional signal delivery from ground based transceivers delivering/receiving the RF signal to/from the antenna atop the radio tower via bulky/heavy/high material cost metal RF coaxial cable to optical signal delivery to a tower top mounted transceiver known as a remote radio unit (RRU) or remote radio head (RRH) with implementation of FTTA (Fiber To The Antenna) cabling.

FTTA cabling may be simplified where power and/or control signal conductors are provided with optical signal conductors in a single hybrid cable.

Optical conductors may be fragile, requiring great care to properly terminate.

Prior hybrid cable RRU/RRH terminations have employed an over-voltage protection and/or distribution box for terminating each of the electrical and optical conductors as individual jumpers. These additional enclosures require field termination of the several conductors atop the radio tower, increasing installation time and labor requirements. Further, each break in the conductors provides another opportunity for signal degradation and/or environmental fouling. US2005/0111811 discloses a pulling grip for installing pre-connectorized fiber optic cables. Such a pulling grip is used for facilitating installation of fiber optic cables in e.g. small diameter conduits. The pulling grip comprises a furcation plug which is mounted on the fiber optic cable and is configured to separate fiber ribbons of the optical cable. Another exemplary pulling grip is disclosed in EP2159616.

Factory terminated hybrid cable assemblies are known. However, these assemblies may apply splices to the conductors, require a relatively large in-line break-out/splice enclosure and/or utilize environmental seals which fail to positively interlock the jumpers therewith, which may increase the potential for cable and/or individual conductor damage to occur. As an example, EP1245980 discloses a furcation kit that attempts to relieve strain exerted on the furcation kit using strength fibers from the optical cables. Further, WO2012/038104 discloses a cable breakout assembly comprising a central conduit through which a cable is fed and spliced. Another example is a furcation apparatus for optical fibers disclosed in US6389214.

Therefore, an object of the invention is to provide an optical fiber/electrical cable assembly with sealed breakout kit and/or cable assembly and method of use that overcomes deficiencies in the prior art.

### Brief Description of the Drawings

The accompanying drawings, which are incorporated in and constitute a part of this specification, illustrate embodiments of the invention, where like reference numbers in the drawing figures refer to the same feature or element and may not be described in detail for every drawing figure in which they appear and, together with a general description of the invention given above, and the detailed description of the embodiments given below, serve to explain the principles of the invention.
Figure 1 is a schematic isometric view of an exemplary transition housing.
Figure 2 is schematic side view of the transition housing of Figure 1.
Figure 3 is a schematic side view of a cable portion of the transition housing of Figure 1.
Figure 4 is schematic cut-away side view of the cable portion of Figure 3.
Figure 5 is a schematic isometric view of a furcation portion of the transition housing of Figure 1.
Figure 6 is a schematic cut-away side view of the furcation portion of Figure 5.
Figure 7 is a schematic end view of the transition end of the furcation portion of Figure 6.
Figure 8 is a schematic isometric cut-away view of the transition housing of Figure 1.
Figure 9 is schematic side section view of the transition housing of Figure 8.
Figure 10 is another schematic isometric cut-away view of the transition housing of Figure 1.
Figure 11 is schematic side section view of the transition housing of Figure 10.
Figure 12 is a schematic isometric view of the inner wall portion and end stop of the transition housing of Figure 1.
Figure 13 is a schematic cut-away side view of the inner wall portion of Figure 12.
Figure 14 is a schematic isometric view of an alternative inner wall portion.
Figure 15 is a schematic cut-away side view of the inner wall portion of Figure 14.
Figure 16 is a schematic isometric view of an exemplary conductor furcation tube.
Figure 17 is a schematic isometric view of an exemplary fiber furcation tube.
Figure 18 is a schematic isometric partial cut-away view of a transition housing with cable and furcation tubes installed.
Figure 19 is another schematic isometric partial cut-away view of the transition housing and cabling of Figure 18.
Figure 20 is a schematic isometric view of the transition housing and cabling of Figure 18.
Figure 21 is a schematic isometric view of one end of an exemplary cable assembly with a transition housing and connector terminated furcation tubes installed.
Figure 22 is a schematic isometric view of an exemplary fiber capsule cap.
Figure 23 is a schematic isometric view showing sidewall slots between fiber ports of the fiber capsule cap of Figure 22.
Figure 24 is a schematic partial cut-away side view of an embodiment of a transition housing with a fiber capsule.
Figure 25 is a schematic close-up view of a portion of Figure 24.
Figure 26 is a schematic isometric view of the furcation portion of the transition housing of Figure 24.
Figure 27 is a schematic cut-away side view of the furcation portion of Figure 26.
Figure 28 is a schematic isometric view of an alternative furcation portion with a fiber capsule port.
Figure 29 is a schematic end view of the furcation portion of Figure 28.
Figure 30 is a schematic isometric view of an inner wall portion dimensioned to seat within a fiber capsule port.
Figure 31 is a schematic cut-away side view of the inner wall portion of Figure 30.
Figure 32 is a schematic isometric view of a transition housing with the inner wall portion of Figure 30 seated in a fiber capsule port.
Figure 33 is a schematic partial cut-away close-up side view of the transition housing of Figure 32.
Figure 34 is a schematic partial cut-away isometric view of an inner wall portion pre-assembly of a fiber bundle and fiber furcation tubes, the inner wall portion sealed with adhesive.
Figure 35 is a schematic isometric view of an alternative inner wall portion.
Figure 36 is a schematic cut-away side view of a transition housing with the inner wall portion of Figure 35 installed via application of shrink tubing.

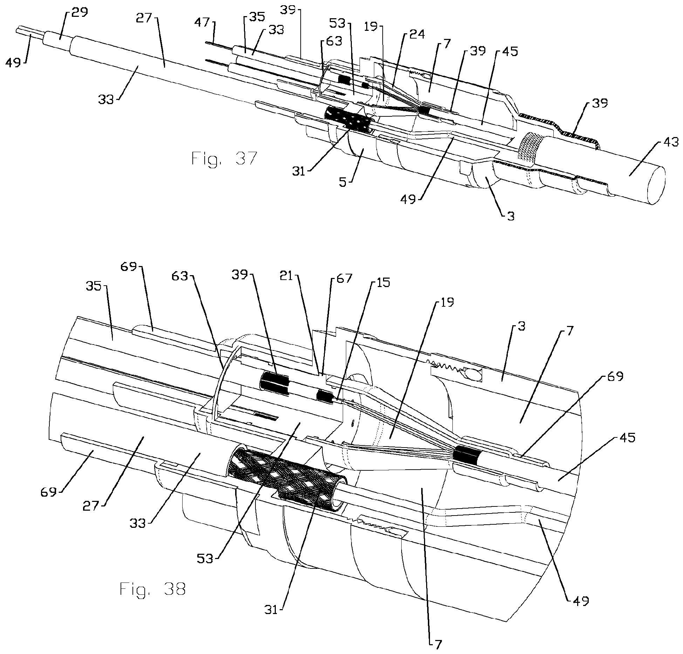

Figure 37 is a schematic isometric partial cut-away view of a transition housing with fiber capsule, with cable and furcation tubes installed.
Figure 38 is a close-up view of Figure 38.

### Detailed Description

The inventor has recognized that individual conductors of a hybrid electrical and optical conductor cable may be broken out into individual jumpers, without requiring termination and/or or splicing of the individual and/or groups of related conductors, by removing outer protective layers of the hybrid cable and providing protective sheaths for each of the conductors and/or conductor groups, the protective sheaths positively interlocked with the hybrid cable via a transition housing.

A typical hybrid cable, for example an FTTA cable, includes multiple metal (such as copper) conductors and single or multiple optical fibers in a subunit. A fiber subunit may include multiple optical fibers (such as 250um or 900um). In order to connect conductors and/or fibers directly to the RRH, optical fiber and power conductors are separated from the hybrid cable as individual jumpers, the jumpers protected with separate furcation tubes.

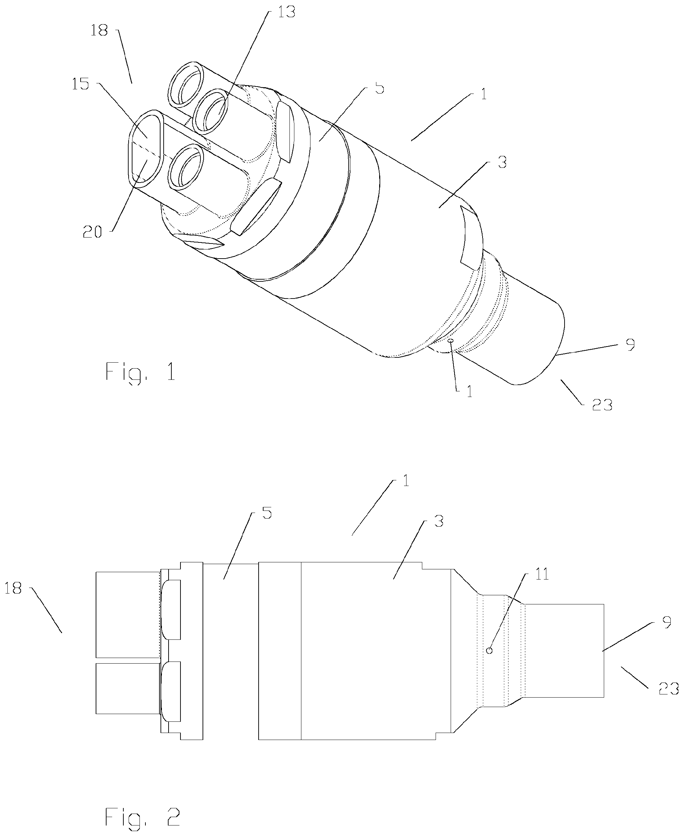

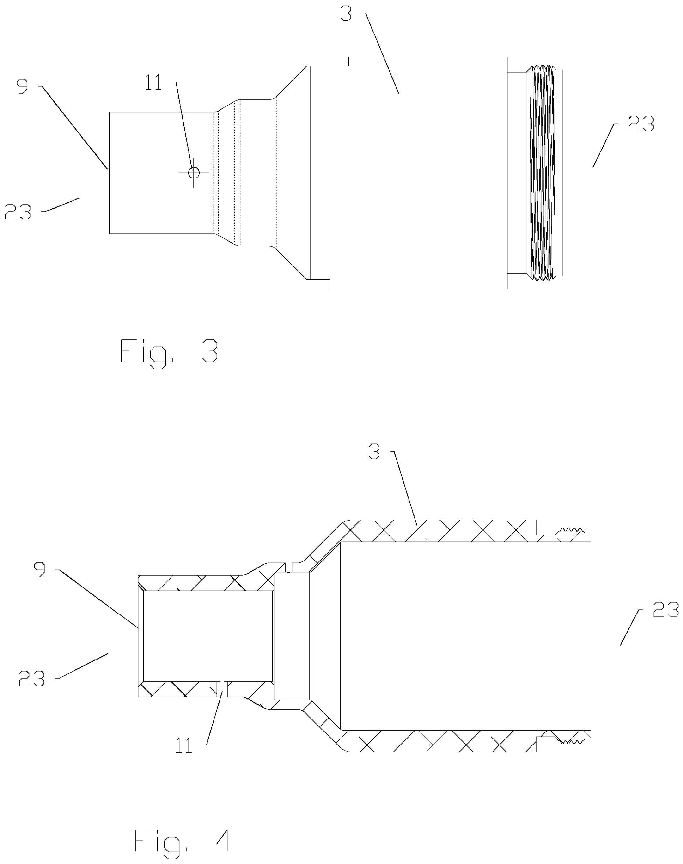

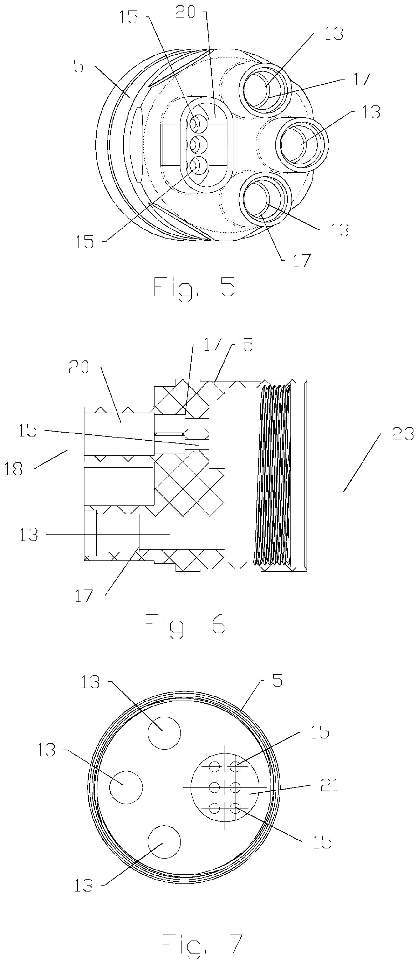

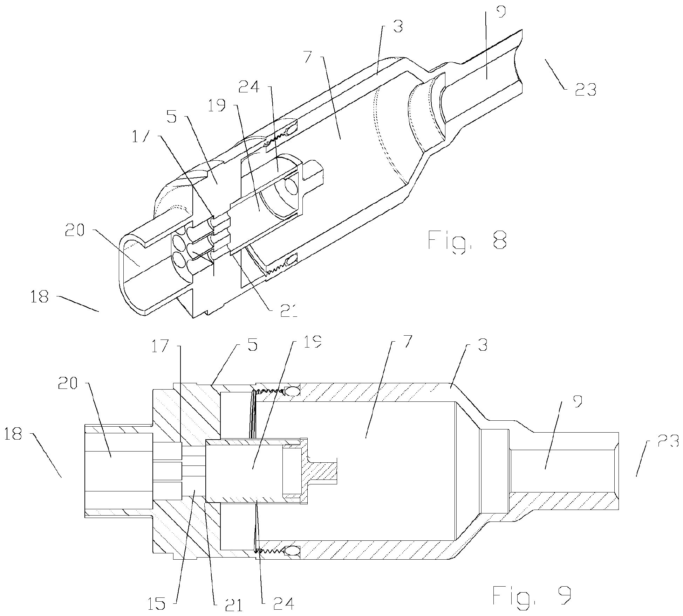

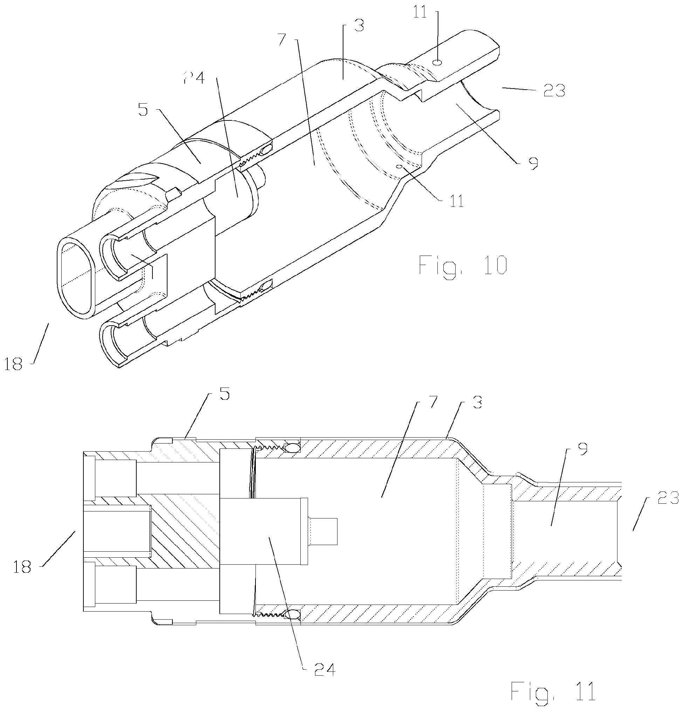

A transition housing 1, for example as shown in Figures 1-15, surrounds the transition of the hybrid cable to the furcation tubes. The transition housing 1 may be provided, for example, as a polymer or metal material housing with a cable portion 3 (Figures 3 and 4) and a furcation portion 5 (Figures 5-7) that mate within one another to enclose a break-out area 7 (best shown in Figures 8-11). The transition housing 1 may be formed, for example, by injection molding, machining and/or insert molding.

The cable portion 3 includes a cable port 9 dimensioned to receive the hybrid cable. The cable port 9 may be dimensioned to enable the cable portion 3 to be drawn over the cable end and any shielding and/or outer jacket of the hybrid cable during installation to allow mounting the furcation portion 5 close to the end of the outer jacket. The cable portion 3 can then be drawn toward the seated furcation portion 5 for sealing of the furcation area 7. The mating between the cable and furcation portions 3, 5 may be, for example, via threads, interference and/or snap fit, or alternatively via fasteners such as screws or bolts. The cable and/or furcation portions 3, 5 may include one or more adhesive ports 11 for injecting an adhesive and/or sealant into the furcation area 7 and/or exhausting these areas as the adhesive and/or sealant is applied.

The adhesive may be an epoxy with elastomeric properties.

The furcation portion 5 may include one or more conductor ports 13 and fiber ports 15. The conductor ports 13 may be dimensioned to receive conductor furcation tubes therethrough, into the furcation area 7.

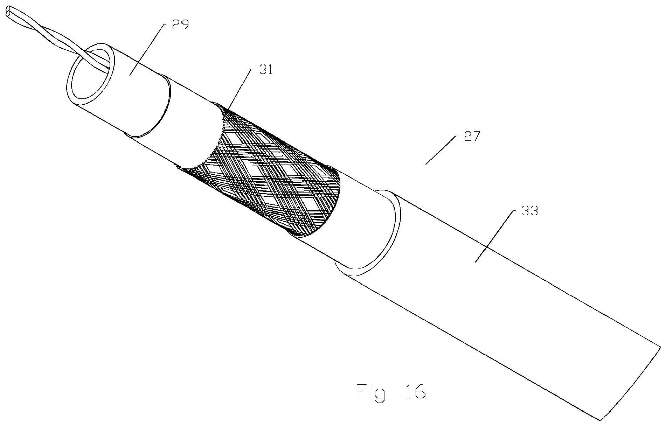

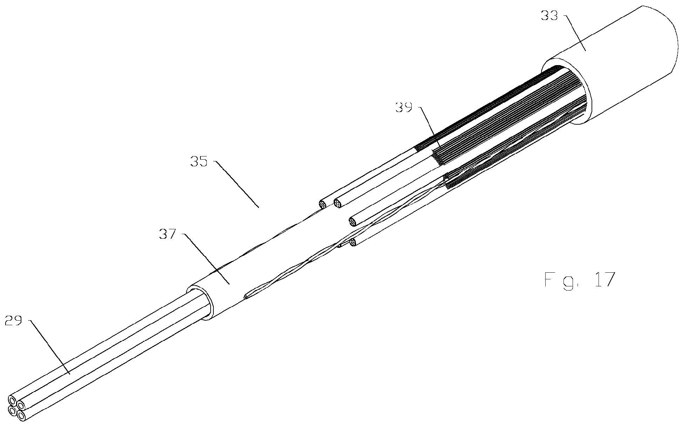

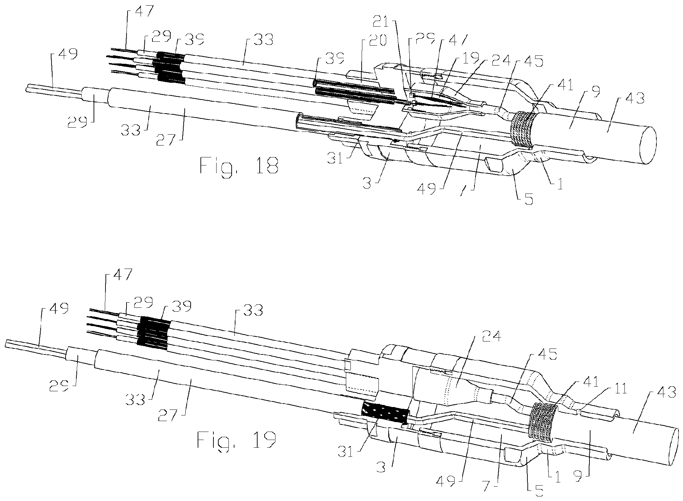

The conductor furcation tubes 27 may include, for example, an inner tube 29, a metallic shield layer 31 and outer jacket 33, for example as shown in Figure 16. Shielded conductor furcation tubes 27 are described in detail in commonly owned US Patent Application No. 13/791,248, titled "Shielded Electrical Conductor Furcation Assembly" filed 8 March 2013 by Nahid Islam, hereby incorporated by reference in its entirety. The fiber furcation tubes 35 may include, for example, an inner jacket 37, a fiber and strength layer 39 and outer jacket 33, for example as shown in Figure 17. Damage-resistant fiber furcation tubes 35 are described in detail in commonly owned US Patent Application No. 13/832,131, titled "Rugged Furcation Tube" filed 15 March 2013 by Nahid Islam, hereby incorporated by reference in its entirety. For example, each fiber furcation tube 35 may be dimensioned to receive either 900um or 250um optical fibers. Further, each fiber furcation tube 35 may include multiple inner tubes 29, within the inner jacket 37, for separate fibers and/or fiber bundles. The inner tubes 29 may be dimensioned to pass through the fiber ports 15, into the fiber area 19, as shown for example in Figure 18.

The fiber ports 15 may be dimensioned with a furcation shoulder 17 (see Figure 6) dimensioned to seat the fiber and strength layer 39 and/or outer jacket 33 of a fiber furcation tube 37, the remainder of the fiber port 15 dimensioned to pass the fiber and/or fiber bundle therethrough. Several fiber ports 15 may be grouped together with an adhesive well 20 projecting from the furcation end 18, for adhering several fiber furcation tubes 35 further to one another, to increase a pull-off resistance characteristic of each individual fiber furcation tube and/or allow an increased amount of adhesive to be applied thereto, so that the furcation end 18 is provided with an elastomeric characteristic to protect the individual fiber furcation tubes 35 from buckling against a lip of the respective fiber ports 15.

The conductor ports 13 may also include a furcation shoulder 17 at the furcation end 18, to allow an increased amount of adhesive to be applied thereto, so that the furcation end 18 is provided with an elastomeric characteristic to increase a pull-off resistance characteristic and/or protect the conductor furcation tubes 27 from buckling against a lip of the conductor port 13.

The fibers 47 are isolated from the furcation area 7 to prevent their immobilization in adhesive injected within the furcation area 7. Thereby, the fibers 47 may be isolated from stresses generated by thermal expansion differentials that may exist between metal and/or polymeric portions of the assembly and the fibers. That is, the fibers 47 are free floating between the cable 43 and the fiber furcation tube 35.

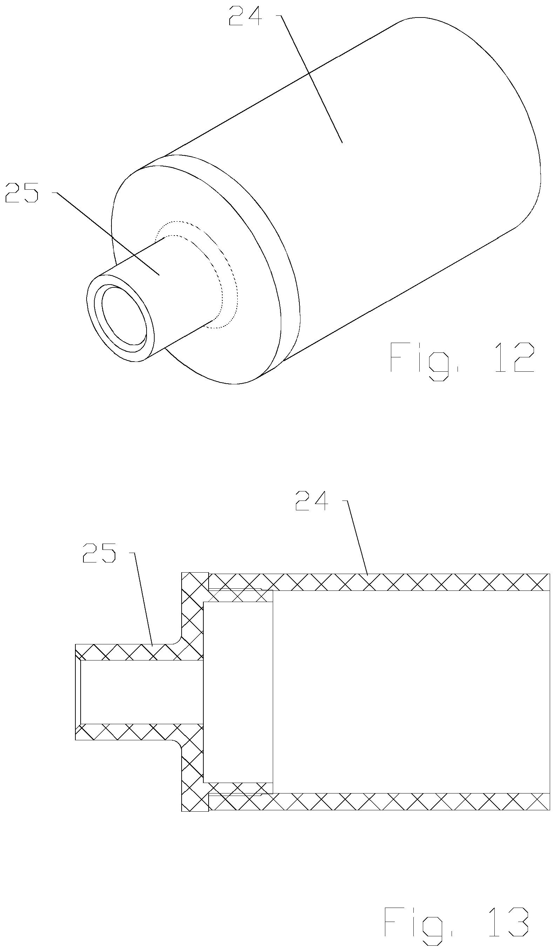

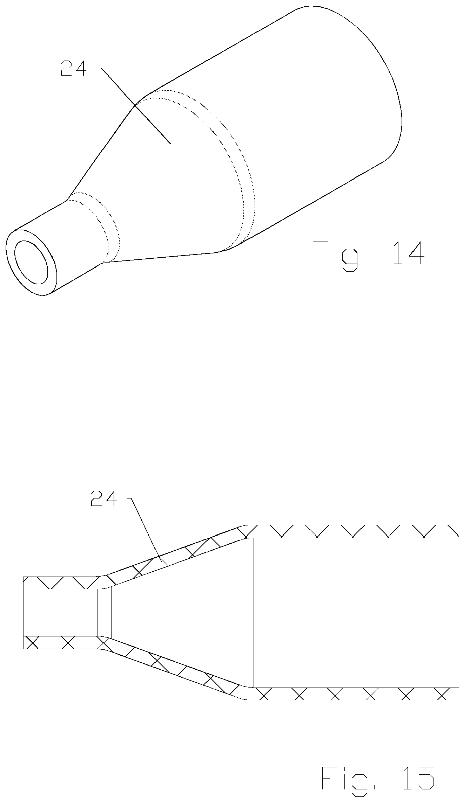

The fiber area 19 (see Figures 8 and 9) wherein the individual fibers transition from the fiber bundle 45 of the cable 43 to their respective fiber furcation tubes 35 may be provided, for example, via an inner wall portion 24 that seats into a fiber area shoulder 21 (see Figure 7-9) of the transition end 23 of the furcation portion 5 surrounding the fiber ports 15 and is sealed against a fiber bundle 45 of the cable 43 by an end stop 25 sealing between an outer jacket of the fiber bundle 45 and the inner wall portion 24. Where the inner wall portion 24 is cylindrical, the end stop 25 may be provided as a polymeric annular gasket or the like, seated sealing on an inner diameter against the outer jacket of the fiber bundle 45 and on an outer diameter against an inner diameter of a bore of the inner wall portion 24, as shown for example in Figures 12 and 13. Alternatively, the inner wall portion 24 may be formed with, for example, a conical reduction proximate the transition end 23, wherein the transition end 23 has an inner diameter proximate an outer diameter of the outer jacket of the fiber bundle 45, for example as best shown in Figures 14, 15 and 18. One skilled in the art will appreciate that that the fiber bundle 45 may be a fiber subunit of the cable 43 which encloses a single fiber 47 or a plurality of fibers 47.

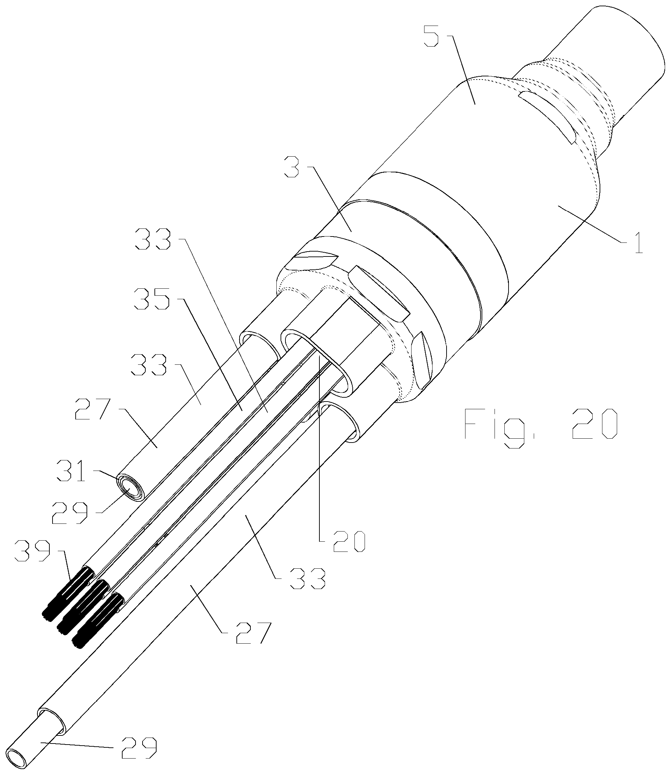

To manufacture an assembly, for example as shown in Figures 18-21, the cable 43 has the outer jacket 33 and any shield 41 stripped back to expose desired lengths of the fiber 47, electrical conductors 49 and/or fiber bundles 45. The cable portion 3 is advanced over the conductors and over the outer jacket 33 of the cable 43 and the end stop 25 (if present) and inner wall portion 24 advanced over the fiber bundle 45. The furcation portion 5 is advanced over the conductors, each of the conductors and/or conductor bundles inserted to respective fiber and/or conductor furcation tubes 35, 27, the conductor furcation tubes 27 passed through conductor ports 13 and fiber furcation tubes 35 seated in their respective furcation shoulders 17, for example as shown in Figures 18 and 19. The metallic shield layer 31 of the conductor furcation tubes 27 may be coupled to a drain wire and/or the shield 41 of the cable 43, for example via a shield interconnection, such as a tie wire, fastener, soldering or the like. The shield interconnection and fiber area 19 (inner wall portion 24 sealed against the transition end 23 of the furcation portion 25 by seating in the fiber area shoulder 21 and closed by the end stop 24) are enclosed by returning the cable portion 3 towards the furcation portion 5 and coupling them together (see Figure 19).

The furcation area 7 may then be sealed/encapsulated by injecting a desired adhesive (also known as a sealant or caulk) into the adhesive port(s) 11 of the cable and/or furcation portions 3, 5, until the adhesive is observed, for example, at the cable port 9 and/or conductor ports 13. Further adhesive may be applied to seal the fiber furcation tubes 35 into the furcation shoulders 17 of the fiber ports 15 and the fiber furcation tubes 35 to one another within the adhesive well 20 of the furcation portion 5. Splaying a fiber portion of the fiber and strength layer 39 so that it extends within the furcation shoulder 17 and/or further into the adhesive well 20 (see Figure 18) provides secure retention of the fiber furcation tubes 35 to the furcation portion 5 and thereby to the assembly.

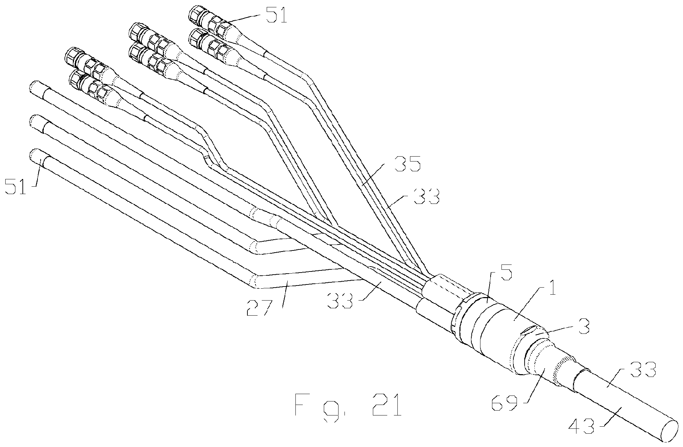

The transition housing 1, individual conductor ports 13 and/or the adhesive well 20 may be further sealed by applying shrink tubing 69 or pultruded seals there around, for example as shown in Figures 21, 35 and 36.

The assembly may be further completed by applying desired connectors to each of the conductors at the end of their respective furcation tubes, as best in Figure 21.

A grounding lug may be applied to the transition housing and/or a grounding lead may be routed from the junction of the cable shield/drain wire and conductor furcation tube shields to the sidewall of the assembly (if conductive) or in a sealed fashion to an exterior of the assembly to provide a ready grounding point for the cable assembly.

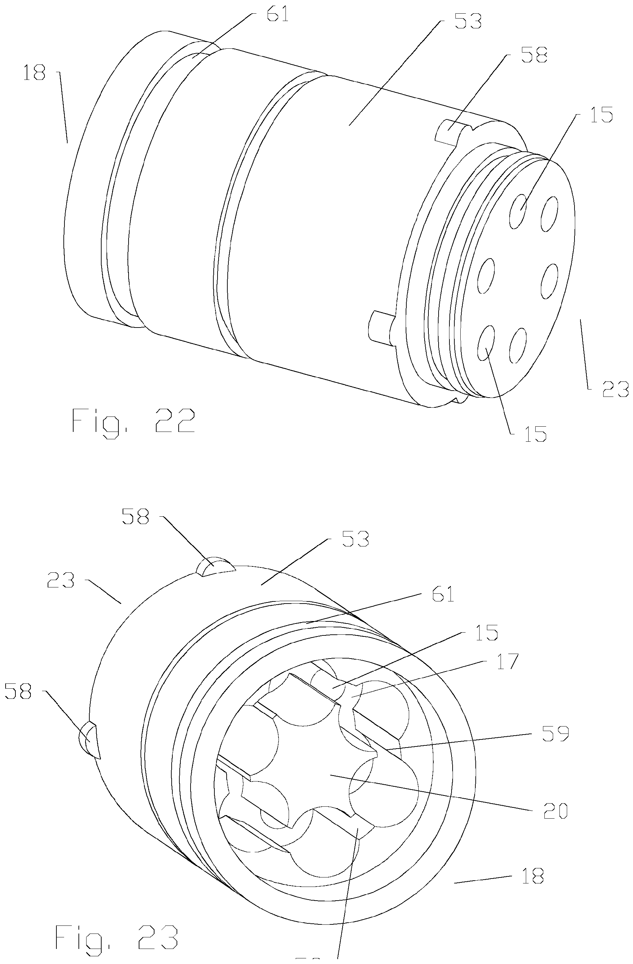

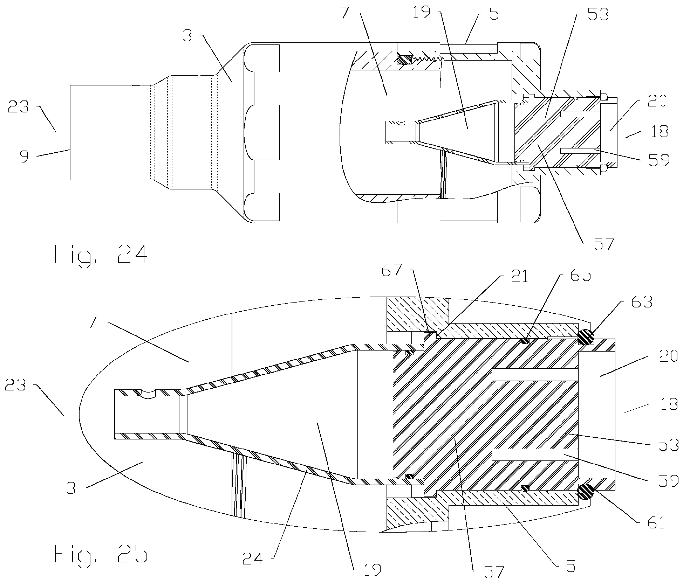

In a further embodiment, the inner wall portion 24 may be provided with a fiber capsule cap 53 which includes the fiber port(s) 15, for example as shown in Figures 22 and 23, The inner wall portion 24 and fiber capsule cap 53 mate together to form a fiber capsule 55 that encloses the fiber area 19, as shown in Figures 24 and 25.

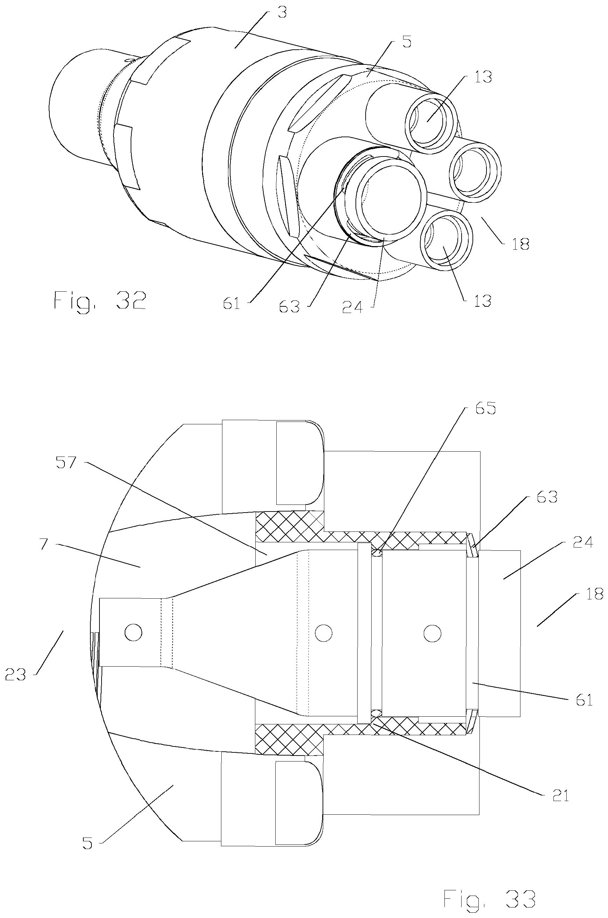

When a fiber capsule 55 is applied, the furcation portion 5 may be simplified to include a fiber capsule port 57, instead of the multiple fiber ports 15 and adhesive well features. The fiber capsule port 57 may include a fiber area shoulder 21 dimensioned to receive a stop rim 67 of the fiber capsule cap 53 or the inner wall portion 24, for example as shown in Figures 25 and 33. Thereby, the manufacture of the furcation portion 5 is simplified by transferring the formation of the several small holes of the fiber ports 15 and associated surface features to a much smaller overall element, such as the fiber capsule cap 53, where the overall scale of the element is closer to that of the dimensions of the fiber port(s) 15, simplifying the corresponding mold and/or machining requirements. Further, multiple fiber capsule caps 53 may be cost efficiently manufactured/provided, with varying numbers of fiber ports 15 and or fiber port dimensions, to match the number and/or type of fibers 47 that are present in the desired cable assembly. Thereby, a single furcation portion 5 configuration may be utilized with a range of cables, including cables with different numbers and/or types of fibers 47.

The fiber capsule cap 53, may include an adhesive well 20 at the furcation end 18, as best shown in Figure 23. The furcation shoulders 17 of the fiber ports 15 may include sidewall slots 59 communicating between the furcation shoulders 17 of adjacent fiber ports 15. The sidewall slots 57 may enable additional intermingling and mutual reinforcement of splayed fiber portions of the fiber and strength layer 39 so that they extend deeply within more than a single furcation shoulder 17 and/or are distributed further about the adhesive well 20. The increased intermingling and/or distribution of the splayed fiber portions providing enhanced retention of the fiber furcation tubes 35 to the fiber capsule cap 53 and thereby to the assembly, upon application of adhesive to the adhesive well 20.

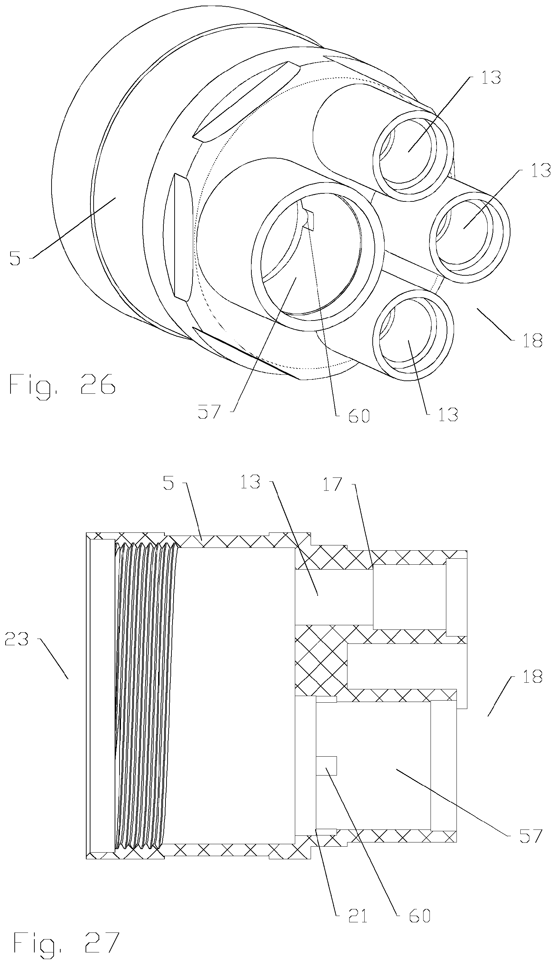

The furcation capsule 53 may be provided with one or more rotational interlock features, such as projections 58, on the outer diameter, for example provided on the fiber capsule cap 53 (See Figures 22 and 23), which key with corresponding sockets 60 provided in the sidewall of the fiber capsule port 57 (See Figures 26 and 27) to rotationally interlock the furcation capsule 53 with the furcation portion 5. Alternatively, the rotational lock features may be applied to the inner wall portion 24.

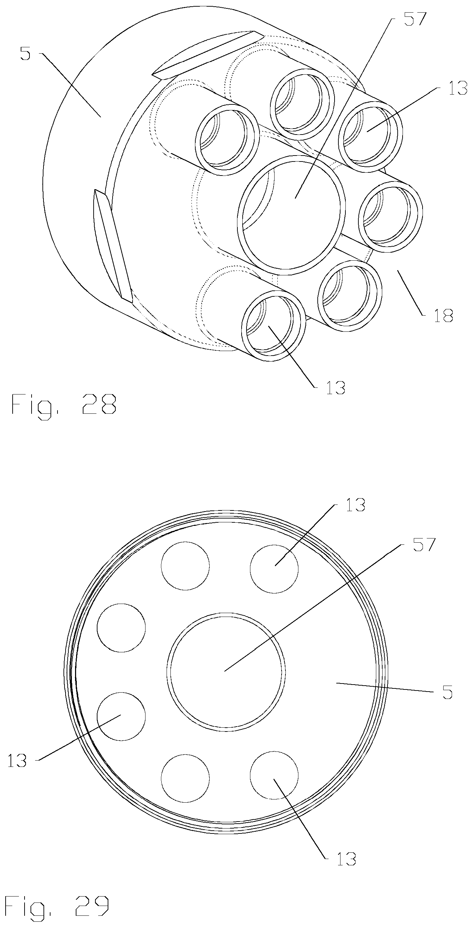

The furcation portion 5 has been demonstrated with the inner wall portion 24 and associated fiber area 19 provided off-center with respect to a cross section of the furcation portion 5, for example for ease of assembly. Alternatively, in a trade-off with ease of assembly, the furcation portion 5 may be configured such that inner wall portion 24 or fiber capsule 55 seat proximate a center of the furcation portion 5, with the conductor ports 9 arrayed there around. Thereby, the fiber furcation tubes 35 may be shielded from harm by the more robust conductor furcation tubes 27. Providing the conductor ports 9 grouped to leave an access area around a centrally positioned fiber capsule port 57, for example as shown in Figures 28 and 29 provides a balance of protection and ease of assembly.

Manufacture of an assembly including a fiber capsule 55 is similar to the description of the previous embodiment except that the fibers inserted into the inner wall portion 24 are also passed through respective fiber ports 15 of the capsule cap 53 which is then seated upon the furcation end 18 of the inner wall portion to form the fiber capsule 55. The fibers are further passed through the fiber capsule port 57 and the fiber capsule 55 seated in the fiber capsule port 57.

The fiber capsule cap 53 may include a retention groove 61 on the outer diameter, positioned to seat a retainer 63 such as an o-ring, c-clip, snap ring or the like, to retain the fiber capsule 55 seated in the fiber capsule port 57 as the furcation portion 5 and cable portion 3 are mated together and encapsulating adhesive is applied to the furcation area 7. Where the retainer 63 is a clip or retaining ring, an environmental seal 65 may be applied to the outer diameter of the capsule cap 53 to seal external access to the furcation area 7 and/or prevent injected adhesive from leaking along the fiber capsule 55 and fiber capsule port 57 interconnection.

The fiber capsule port 57 enables initial preparation of the fiber area 19 and fiber furcation tubes 35, which are then passed through the fiber capsule port 57, simplifying assembly.

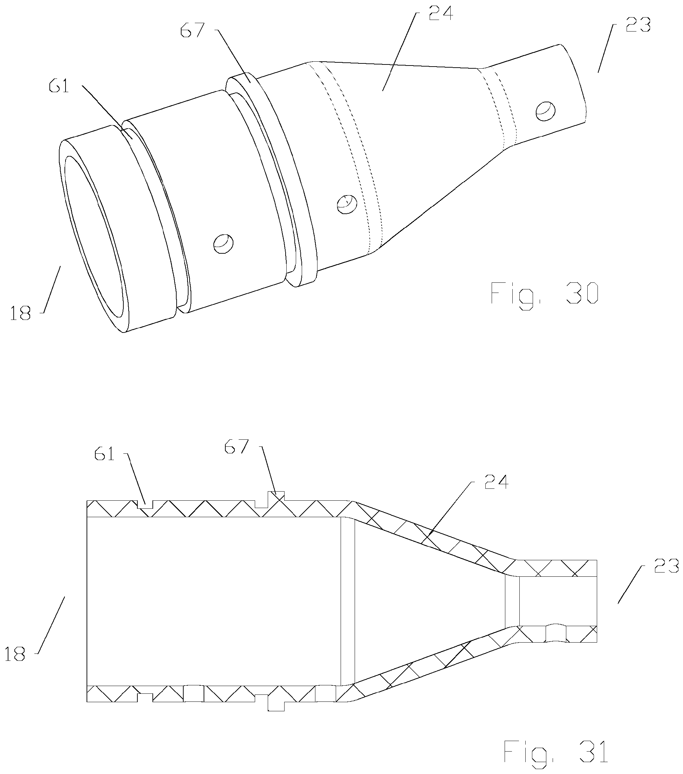

In a further simplification of the fiber capsule 55, the inner wall portion 24 may be adapted to seat within the fiber capsule port 57, without requiring application of a fiber capsule cap 53, for example as shown in Figures 30 and 31. A inner wall portion 24 provided with an outer diameter stop rim 67 dimensioned to seat within the fiber area shoulder 21 seats the inner wall portion 24 within the fiber capsule port 57, but does not enable passage entirely therethrough. Similarly, a retention groove 61 may be provided proximate the furcation end 18 of the inner wall portion 24, for application of a retainer 63 to hold the inner wall portion 24 in place within the fiber capsule port 57, for example as shown in Figures 32 and 33.

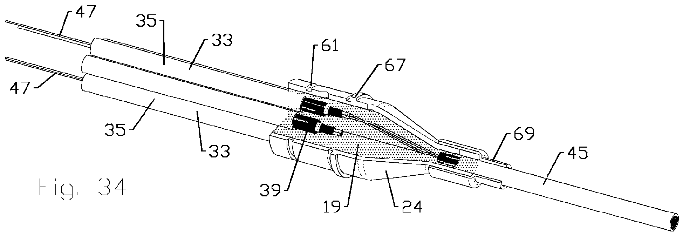

The fiber furcation tubes 35 may be encapsulated within the fiber area 7 as a sub assembly ready for feeding the fiber furcation tubes 35 through the fiber capsule port 57 of the furcation portion 5, by filling the fiber area 7 with an adhesive, for example as shown in Figure 34.

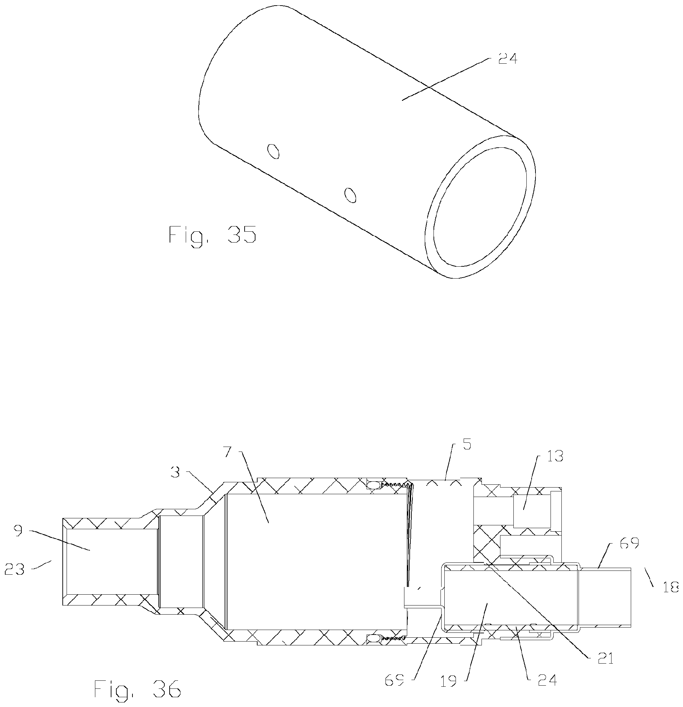

Shrink tubing 69 may be utilized with a simplified inner wall portion 24, for example as shown in Figures 35 and 36. In addition to sealing between the inner wall portion 24 and the fiber bundle 45, the leading edge of the shrink tubing 69, adhered to the inner wall portion 24, may provide the stop rim 67 which abuts the fiber area shoulder 21 and/or functions as a retainer 63 at the furcation end of the inner wall portion 24 to retain the inner wall portion 24 with respect to the furcation portion 5.

One skilled in the art will appreciate that the assembly provides a splice-free cable conductor distribution with significant pull-apart strength and improved environmental sealing in an assembly with minimal dimensions that eliminates the need for distribution boxes and/or on-site conductor termination during installation. Further, because the fibers 47 and/or electrical conductors 49 may lay freely within their respective inner tubes 29 from the transition housing 1 to the connector 51, the fibers 47 and/or electrical conductors 49 are free of thermal expansion and or tensile stress that may be applied to their respective fiber and conductor furcation tubes 35, 27.

**Table of Parts**

| | |
|---|---|
| 1 | transition housing |
| 3 | cable portion |
| 5 | furcation portion |
| 7 | furcation area |
| 9 | cable port |
| 11 | adhesive port |
| 13 | conductor port |
| 15 | fiber port |
| 17 | furcation shoulder |
| 18 | furcation end |
| 19 | fiber area |
| 20 | adhesive well |
| 21 | fiber area shoulder |
| 23 | transition end |
| 24 | inner wall portion |
| 25 | end stop |
| 27 | conductor furcation tube |
| 29 | inner tube |
| 31 | metallic shield layer |
| 33 | outer jacket |
| 35 | fiber furcation tube |
| 37 | inner jacket |
| 39 | fiber and strength layer |
| 41 | shield |
| 43 | cable |
| 45 | fiber bundle |
| 47 | fiber |
| 49 | electrical conductor |
| 51 | connector |
| 53 | fiber capsule cap |
| 55 | fiber capsule |
| 57 | fiber capsule port |
| 58 | projection |
| 59 | sidewall slot |
| 60 | socket |
| 61 | retention groove |
| 63 | retainer |
| 65 | environmental seal |
| 67 | stop rim |
| 69 | shrink tubing |

Where in the foregoing description reference has been made to materials, ratios, integers or components having known equivalents then such equivalents are herein incorporated as if individually set forth.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus, methods, and illustrative examples shown and described. Accordingly, departures may be made from such details without departure from the scope of applicant's general inventive concept. Further, it is to be appreciated that improvements and/or modifications may be made thereto without departing from the scope of the present invention as defined by the following claims.

## Claims

1. A cable breakout kit, comprising:
a cable portion (3);
a furcation portion (5) comprising a fiber capsule port (57);
an inner wall portion (24); and
a fiber capsule cap (53) dimensioned to mate with the inner wall portion and seated in the fiber capsule port; **characterized in that**
the cable portion and the furcation portion are dimensioned to couple with one another, enclosing a furcation area (7);
and wherein the inner wall portion and the fiber capsule cap enclose a fiber area within the furcation area.

2. The cable breakout kit of claim 1, further including at least one fiber port in the fiber capsule cap; the fiber port communicating the fiber area to a furcation end of the fiber capsule cap.

3. The cable breakout kit of claim 2, further including an adhesive well projecting from a furcation end of the fiber capsule cap, surrounding the at least one fiber port.

4. The cable breakout kit of claim 3, comprising a plurality of fiber ports in the fiber capsule cap, wherein the adhesive well surrounds the plurality of fiber ports; at least two of the fiber ports of the plurality of fiber ports are each provided with a furcation shoulder; and a sidewall slot is provided interconnecting the furcation shoulders.

5. The cable breakout kit of claim 1, wherein the fiber capsule cap is dimensioned to rotationally interlock with the fiber capsule port.

6. The cable breakout kit of claim 1, further including a retention groove provided in an outer diameter of the inner wall portion; the retention groove positioned proximate a furcation end of the furcation portion; and
a retainer dimensioned to seat in the retention groove.

7. A method for furcating a cable, comprising steps of:
inserting the cable (43) through a cable port (9) of a cable portion (3) of a transition housing (1);
inserting at least one fiber (47) of the cable through an inner wall portion (24) and a furcation portion (5) of the transition housing;
inserting the fiber through a fiber furcation tube (35) and seating the fiber furcation tube in at least one fiber port (15) of a fiber capsule cap (53) seated in a fiber capsule port (57) of the furcation portion;
inserting an electrical conductor (49) of the cable through the furcation portion and an electrical conductor furcation tube (27) and seating the electrical conductor furcation tube in a conductor port (13) of the furcation portion; and
coupling the cable portion and the furcation portion to one another, enclosing a furcation area (7) therewithin; wherein the fiber capsule cap and the inner wall portion form a fiber area (19) within the furcation area and isolated from the furcation area.

8. The method of claim 7, wherein the furcation area is filled with an adhesive via an adhesive port through one of the cable portion and the furcation portion.

9. The method of claim 7, further including filling the fiber area with an adhesive.

10. A furcated cable assembly, comprising
a cable (43) with a fiber (47) and an electrical conductor (49);
a transition housing (1) coupled to the cable, a fiber furcation tube (35) seated in a fiber port of a fiber capsule cap (53) and an electrical conductor furcation tube (27);
the fiber passing through the transition housing and into the fiber furcation tube;
the electrical conductor passing through the transition housing and into the electrical conductor furcation tube;
the electrical conductor passing through a furcation area (7) of the transition housing and the fiber passing through a fiber area (19) of the transition housing, which is isolated from the furcation area (7), wherein the fiber area is enclosed by the fiber capsule cap and an inner wall portion (24) of the transition housing.

11. The furcated cable assembly of claim 10, wherein the fiber is free floating between the cable and the fiber furcation tube.

12. The furcated cable assembly of claim 10, wherein the fiber area is filled with an adhesive.

13. The furcated cable assembly of claim 10, further including an adhesive well projecting from a furcation end of the fiber capsule cap, surrounding the fiber port.

14. The furcated cable assembly of claim 13, wherein the adhesive well surrounds a plurality of the fiber ports; at least two of the fiber ports provided each with a furcation shoulder; and a sidewall slot is provided interconnecting the furcation shoulders.

15. The furcated cable assembly of claim 10, wherein the fiber capsule cap is dimensioned to rotationally interlock with a fiber capsule port of the transition housing.

## Patentansprüche

1. Ein Kabel-Breakout-Kit, umfassend:
einen Kabelabschnitt (3);
einen Gabelungsabschnitt (5), umfassend einen Faserkapselport (57);
einen inneren Wandabschnitt (24); und
eine Faserkapselabdeckung (53), dimensioniert, um in den inneren Wandabschnitt einzugreifen und in dem Faserkapselport sitzend;
**dadurch gekennzeichnet, dass**
der Kabelabschnitt und der Gabelungsabschnitt dimensioniert sind, sich miteinander zu koppeln und einen Gabelungsbereich (7) zu umschließen;
und wobei der innere Wandabschnitt und die Faserkapselabdeckung einen Faserbereich innerhalb des Gabelungsbereichs umschließen.

2. Kabel-Breakout-Kit nach Anspruch 1, ferner umfassend mindestens einen Faserport in der Faserkapselabdeckung; wobei der Faserport den Faserbereich mit einem Gabelungsende der Faserkapselabdeckung kommuniziert.

3. Kabel-Breakout-Kit nach Anspruch 2, ferner umfassend ein Klebewell, das von einem Gabelungsende der Faserkapselabdeckung vorspringt, den mindestens einen Faserport umgebend.

4. Kabel-Breakout-Kit nach Anspruch 3, umfassend mehrere Faserports in der Faserkapselabdeckung, wobei das Klebewell die mehreren Faserports umgibt; mindestens zwei der Faserports der mehreren Faserports sind jeweils mit einer Gabelungsschulter versehen; und ein Seitenwandausschnitt ist bereitgestellt, der die Gabelungsschultern verbindet.

5. Kabel-Breakout-Kit nach Anspruch 1, wobei die Faserkapselabdeckung dimensioniert ist, sich drehend mit dem Faserkapselport zu verriegeln.

6. Kabel-Breakout-Kit nach Anspruch 1, ferner umfassend eine Haltekerbe, die in einem äußeren Durchmesser des inneren Wandabschnitts bereitgestellt ist; wobei die Haltekerbe neben einem Gabelungsende des Gabelungsabschnitts positioniert ist; und
einen Halter, dimensioniert, in der Haltekerbe zu sitzen.

7. Verfahren zum Gabeln eines Kabels, umfassend die Schritte:
Einführen eines Kabels (43) durch einen Kabelport (9) eines Kabelabschnitts (3) eines Übergangsgehäuses (1);
Einführen von mindestens einer Faser (47) des Kabels durch einen inneren Wandabschnitt (24) und einen Gabelungsabschnitt (5) des Übergangsgehäuses;
Einführen der Faser durch ein Fasergabelungsrohr (35) und Setzen des Fasergabelungsrohrs in mindestens einen Faserport (15) einer Faserkapselabdeckung (53), die in einem Faserkapselport (57) des Gabelungsabschnitts sitzt;
Einführen eines elektrischen Leiters (49) des Kabels durch den Gabelungsabschnitt und eines elektrischen Leitergabelungsrohrs (27) und Setzen des elektrischen Leitergabelungsrohrs in einen Leiterport (13) des Gabelungsabschnitts; und
Koppeln des Kabelabschnitts und des Gabelungsabschnitts miteinander, dadurch einen Gabelungsbereich (7) umschließend; wobei die Faserkapselabdeckung und der innere Wandabschnitt einen Faserbereich (19) bilden, der sich innerhalb des Gabelungsbereichs befindet und von dem Gabelungsbereich isoliert ist.

8. Verfahren nach Anspruch 7, wobei der Gabelungsbereich über einen Klebeport durch den Kabelabschnitt oder den Gabelungsabschnitt mit einem Kleber gefüllt wird.

9. Verfahren nach Anspruch 7, ferner umfassend das Füllen des Faserbereichs mit einem Klebestoff.

10. Gegabelte Kabelbaugruppe, umfassend
ein Kabel (43) mit einer Faser (47) und einem elektrischen Leiter (49);
ein Übergangsgehäuse (1), gekoppelt mit dem Kabel, einem Fasergabelungsrohr (35), das in einem Faserport einer Faserkapselabdeckung (53) sitzt und einem elektrischen Leiterrohr (27);
wobei die Faser durch das Übergangsgehäuse und in das Fasergabelungsrohr läuft;
wobei der elektrische Leiter durch das Übergangsgehäuse und in das elektrische Gabelungsrohr läuft;
wobei der elektrische Leiter durch einen Gabelungsbereich (7) des Übergangsgehäuses läuft und die Faser durch einen Faserbereich (19) des Übergangsgehäuses läuft, das von dem Gabelungsbereich (7) isoliert ist, wobei der Faserbereich durch die Faserkapselabdeckung und einen inneren Wandabschnitt (24) des Übergangsgehäuses umschlossen ist.

11. Gegabelte Kabelbaugruppe nach Anspruch 10, wobei sich die Faser freischwebend zwischen dem Kabel und dem Fasergabelungsrohr befindet.

12. Gegabelte Kabelbaugruppe nach Anspruch 10, wobei der Faserbereich mit einem Klebestoff gefüllt ist.

13. Gegabelte Kabelbaugruppe nach Anspruch 10, ferner umfassend ein Klebewell, das von einem Gabelungsende der Faserkapselabdeckung vorspringt, den Faserport umgebend.

14. Gegabelte Kabelbaugruppe nach Anspruch 13, wobei das Klebewell mehrere Faserports umgibt; mindestens zwei der Faserports jeweils mit einer Gabelungsschulter versehen sind; und ein Seitenwandschlitz bereitgestellt ist, der die Gabelungsschultern verbindet.

15. Gegabelte Kabelbaugruppe nach Anspruch 10, wobei die Faserkapselabdeckung dimensioniert ist, sich drehend mit einem Faserkapselport des Übergangsgehäuses zu verriegeln.

## Revendications

1. Ensemble point de dérivation scellé, comprenant :
une section de câble (3) ;
une section de bifurcation (5) comportant un port de capsule de fibre (57) ;
une section de paroi intérieure (24) ; et
une calotte de capsule de fibre (53) dimensionnée pour correspondre à la section de paroi intérieure et assise dans le port de capsule de fibre ;
**caractérisé en ce que**
la section de câble et la section de bifurcation sont dimensionnées pour se coupler l'une à l'autre, en entourant une zone de bifurcation (7) ;
et la section de paroi intérieure et le capuchon de capsule de fibre entourent une zone de fibre dans la zone de bifurcation.

2. Ensemble point de dérivation scellé selon la revendication 1, comprenant en outre au moins un port de fibre dans le capuchon de capsule de fibre ; le port de fibre mettant en communication la zone de fibre et une extrémité de bifurcation du capuchon de capsule de fibre.

3. Ensemble point de dérivation scellé selon la revendication 2, comprenant en outre un creux à colle saillant d'une extrémité de bifurcation du capuchon de capsule de fibre entourant l'au moins un port de fibre.

4. Ensemble point de dérivation scellé selon la revendication 3, comprenant une pluralité de ports de fibre dans le capuchon de capsule de fibre, le creux à colle entourant la pluralité de ports de fibre ; au moins deux des ports de fibre de la pluralité de ports de fibre étant chacun pourvus d'un épaulement de bifurcation ; et étant pratiquée une fente de paroi latérale connectant les épaulements de bifurcation.

5. Ensemble point de dérivation scellé selon la revendication 1, dans lequel le capuchon de capsule de fibre est dimensionné pour être entrelacé en rotation avec le port de capsule de fibre.

6. Ensemble point de dérivation scellé selon la revendication 1, comprenant en outre une gorge de rétention prévue dans un diamètre extérieur de la section de paroi intérieure ; la gorge de rétention étant positionnée à proximité d'une extrémité de bifurcation de la section de bifurcation ; et
un dispositif de retenue dimensionné de manière à être assis dans la gorge de rétention.

7. Procédé de bifurcation d'un câble, comprenant les étapes suivantes :
insertion du câble (43) à travers un port de câble (9) d'une section de câble (3) d'un boîtier de transmission (1) ;
insertion d'au moins une fibre (47) du câble à travers une section de paroi intérieure (24) et une section de bifurcation (5) du boîtier de transition ;
insertion de la fibre à travers un tube de bifurcation (35) et placement du tube de bifurcation de fibre dans au moins un port de fibre (15) d'un capuchon de capsule de fibre (53) assis dans un port de capsule de fibre (57) de la section de bifurcation ;
insertion d'un conducteur électrique (49) du câble à travers la section de bifurcation et un tube de bifurcation de conducteur électrique (27) et placement du tube de bifurcation de conducteur électrique dans un port de conducteur (13) de la section de bifurcation ; et
couplage de la section de câble et de la section de bifurcation l'une à l'autre, en renfermant une zone de bifurcation (7) à l'intérieur ; le capuchon de capsule de fibre et la section de paroi intérieure formant une zone de fibre (19) dans la zone de bifurcation et étant isolés de la zone de bifurcation.

8. Procédé selon la revendication 7, dans lequel la zone de bifurcation est remplie d'une colle par l'intermédiaire d'un port de colle à travers une parmi la section de câble et la section de bifurcation.

9. Procédé selon la revendication 7, incluant en outre le remplissage de la zone de fibre avec une colle.

10. Ensemble câble à bifurcation, comprenant
un câble (43) doté d'une fibre (47) et d'un conducteur électrique (49) ;
un boîtier de transition (1) couplé au câble, un tube de bifurcation (35) assis dans un port de fibre tel capuchon de capsule de fibre (53) et un tube de bifurcation de conducteur électrique (27) ;
la fibre passant à travers le boîtier de transition et dans le tube de bifurcation de fibre ;
le conducteur électrique passant à travers le boîtier de transition et dans le tube de bifurcation de conducteur électrique ;
le conducteur électrique passant à travers une zone de bifurcation (7) du boîtier de transition et la fibre passant à travers une zone de fibre (19) du boîtier de transition qui est isolé de la zone de transition (7), la zone de fibre étant entourée par le capuchon de capsule de fibre et une section de paroi intérieure (24) du boîtier de transition.

11. Ensemble câble à bifurcation selon la revendication 10, dans lequel la fibre flotte librement entre le câble et le tube de bifurcation de fibres.

12. Ensemble câble à bifurcation selon la revendication 10, dans lequel la zone de fibre est remplie de colle.

13. Ensemble câble à bifurcation selon la revendication 10, incluant en outre un creux à colle saillant d'une extrémité de bifurcation du capuchon de capsule de fibre entourant le port de fibre.

14. Ensemble câble à bifurcation selon la revendication 13, dans lequel le creux à colle entoure une pluralité de ports de fibre, au moins deux des ports de fibre étant pourvus chacun d'un épaulement de bifurcation ; et début étant pratiquée une fente de paroi latérale interne connectant les épaulements de bifurcation.

15. Ensemble câble à bifurcation selon la revendication 10, dans lequel le capuchon de capsule de fibre est dimensionné pour être entremêlé en rotation avec un port de capsule de fibre du boîtier de transition.
